# FASCICULE DE BREVET EUROPEEN

(11) **EP 3 049 599 B1**
(45) Date de publication et mention de la délivrance du brevet: **04.10.2017**
(21) Numéro de dépôt: 14786982.0
(22) Date de dépôt: 26.08.2014
(51) Int. Cl.: E05C 19/02, E05C 19/06

(54) **DISPOSITIF DE FIXATION D'UN OBJET SUR UNE PLAQUE SUPPORT ET ASSEMBLAGE OBTENU**
VORRICHTUNG ZUR BEFESTIGUNG EINES OBJEKTES AUF EINER TRÄGERPLATTE UND ANORDNUNG
FIXING MEMBER FOR AN OBJECT TO A SUPPORT PLATE AND OBTAINED ASSEMBLY

(30) Priorité: 24.09.2013 FR 1359153
(43) Date de publication de la demande: 03.08.2016
(73) Titulaire: A. RAYMOND ET CIE, 38000 Grenoble (FR)
(72) Inventeur: PAQUET, Jérôme, F-38650 Treffort (FR)
(74) Mandataire: Prugneau, Philippe
(86) Numéro de dépôt international: PCT/FR2014/052125
(87) Numéro de publication internationale: WO 2015/044548

(56) Documents cités:
- WO-A1-2013/022907
- DE-A1-102005 052 736
- FR-A1- 2 852 996
- US-A1- 2007 120 380

## Description

### Domaine technique

L'invention concerne de façon générale un dispositif de fixation d'un objet sur une plaque support, par exemple pour fixer un objet dans l'habitacle d'un véhicule automobile. L'invention concerne également un assemblage obtenu avec un tel dispositif de fixation.

### Technique antérieure

Ce type de dispositifs de fixation doit assurer un ancrage efficace permettant notamment de résister lors d'un choc frontal pour éviter que l'objet et/ou le dispositif de fixation ne se transforme en projectile. De sorte à assurer la maintenance, le dispositif de fixation doit toutefois être facilement démontable.

La publication FR 2 852 996 décrit un tel dispositif de fixation comportant un corps creux apte à être solidarisé à une plaque support et un coulisseau apte à être solidarisé à l'objet à fixer et à se loger dans le corps creux. Le corps creux et le coulisseau sont pourvus de moyens de blocage aptes à bloquer longitudinalement le coulisseau dans le corps creux après une première poussée longitudinale forçant l'engagement du coulisseau dans le corps creux, et aptes à débloquer le coulisseau par rapport au corps creux après une seconde poussée longitudinale sur le coulisseau. Le dispositif de fixation comporte un ressort prévu entre le corps creux et le coulisseau et sollicitant longitudinalement le coulisseau vers l'extérieur du corps creux. Les moyens de blocage comportent une patte flexible apte à se déformer latéralement, formée par le corps creux et dont l'extrémité est pourvue d'un doigt de came. Les moyens de blocage comportent également une came portée par le coulisseau et apte à guider le doigt de came. A cet effet, la came comporte un ilot central dont la périphérie forme un chemin de came guidant le doigt de came. Cet ilot central comporte un renfoncement définissant une position de blocage dans laquelle ledit doigt de came empêche le retrait longitudinal du coulisseau par rapport au corps creux. Ainsi, le blocage du coulisseau dans le corps creux est obtenu par une première poussée longitudinale du coulisseau dans le corps creux au cours de laquelle la patte flexible est déformée par le doigt de came qui suit le chemin de came. Lorsque le doigt de came atteint le renfoncement, la patte flexible se détend. Le ressort sollicite le coulisseau dans le sens de son retrait jusqu'au blocage du doigt de came en position de blocage dans le renfoncement de la came. L'objet est ainsi solidarisé à la plaque support. Le déblocage du coulisseau est obtenu par une seconde poussée longitudinale sur le coulisseau au cours de laquelle le doigt de came s'éloigne longitudinalement du renfoncement jusqu'à rencontrer un relief qui déforme latéralement la patte flexible en décalant latéralement le doigt de came du renfoncement. Pour pouvoir loger le doigt de came dans le renfoncement puis pour appliquer la seconde poussée longitudinale, l'objet doit nécessairement ne pas être déjà plaqué contre la paroi support. Ainsi, lorsque le coulisseau est dans sa position de blocage, il persiste un jeu fonctionnel longitudinal entre l'objet et la plaque support autorisant une poussée longitudinale ultérieure. Après la seconde poussée longitudinale, lors du relâchement, le ressort provoque le retrait du coulisseau par rapport au corps creux, le doigt de came circule alors librement sur le coté latérale de l'ilot central. Le coulisseau est alors libre d'être extrait du corps creux, l'objet est ainsi désolidarisé de la plaque support.

La publication US 2008/0 211 249 décrit un dispositif de fixation sensiblement similaire dans lequel le coulisseau comporte, en outre, des mâchoires flexibles destinées à, lorsque le coulisseau s'engage dans le corps creux, se rapprocher l'une vers l'autre pour enserrer entre elles l'objet à fixer à la plaque support.

Ces dispositifs de fixation présentent plusieurs inconvénients majeurs. En premier lieu, ils nécessitent un nombre important de pièces et sont complexes à fabriquer. Leur assemblage est délicat, le ressort devant être maintenu en place dans le corps creux avant et au début de l'engagement du coulisseau. En second lieu, chacun de ces dispositifs de fixation nécessite qu'un jeu fonctionnel longitudinal entre l'objet et la plaque support persiste une fois le verrouillage réalisé. Si un tel jeu fonctionnel longitudinal ne persiste pas, aucun déverrouillage ne peut être obtenu sans la rupture d'une ou plusieurs des pièces du dispositif de fixation. A cause de ce jeu fonctionnel longitudinal, l'objet peut, par inadvertance, être rapproché de la plaque et provoquer le déverrouillage involontaire du coulisseau. De plus, ce jeu fonctionnel longitudinal peut induire une impression d'insécurité de la fixation pour l'utilisateur qui constate que l'objet peut se déplacer, par exemple lorsqu'il est soumis aux vibrations liées aux variations de vitesse et aux irrégularités de la route. Par ailleurs, en cas de choc, la fixation est de type « tout ou rien » à savoir que soit les éléments (en particulier la patte flexible) résistent à l'effort d'arrachage et l'objet reste solidarisé à la plaque support, soit l'un des éléments rompt et l'objet est libre de déplacement par rapport à la plaque support. Enfin, ces dispositifs ne permettent pas de mettre en évidence une tentative d'arrachage qui n'aurait pas abouti à la désolidarisation de l'objet mais aurait pu affaiblir la résistance mécanique des pièces.

La publication DE 10 2005 052736 décrit un dispositif à poussoir pour l'ouverture et la fermeture du couvercle d'un compartiment de rangement d'objets.

### Exposé de l'invention

Le but de l'invention est de remédier à ces inconvénients en proposant un dispositif de fixation d'un objet sur une plaque support, facile à fabriquer, à assembler et à utiliser, assurant une fixation sécurisée fiable et démontable, sans jeu longitudinal fonctionnel, permettant en cas de choc de ne pas désolidariser complètement l'objet de la plaque support et de témoigner de toute tentative d'arrachage ; ainsi qu'un assemblage obtenu.

A cet effet, l'invention a pour objet un dispositif de fixation d'un objet sur une plaque support, comportant un corps creux destiné à être logé dans une ouverture d'engagement de la plaque support et pourvu de moyens d'ancrage aptes à le solidariser à la plaque support, un coulisseau apte à être successivement engagé et extrait par rapport au corps creux et pourvu de moyens d'accrochage aptes à le solidariser à l'objet, des moyens de blocage agencés pour :
- par application d'une première poussée longitudinale sur le coulisseau, dans un premier temps, autoriser l'engagement longitudinal du coulisseau dans le corps creux et, dans un second temps, tendre à maintenir le coulisseau bloqué longitudinalement par rapport au corps creux dans une première position de blocage dans laquelle il ne peut être engagé longitudinalement au-delà de la première position de blocage,
- par application d'un premier effort de retrait longitudinal sur le coulisseau succédant à la première poussée longitudinale, s'escamoter partiellement et, dans un premier temps, débloquer le coulisseau de la première position de blocage et autoriser son retrait partiel par rapport au corps creux puis depuis la première position de blocage, dans un second temps, bloquer longitudinalement le coulisseau dans une seconde position de blocage décalée longitudinalement par rapport à la première position et dans laquelle il ne peut être retiré du corps creux et peut être engagé longitudinalement au-delà de la seconde position de blocage.
caractérisé en ce que les moyens de blocage comportent au moins une ouverture latérale traversant le corps creux et une patte de blocage élastiquement déformable portée par le coulisseau et destinée à, lors de l'engagement du coulisseau dans le corps creux, se déployer latéralement dans l'ouverture latérale et prendre appui simultanément sous la plaque support pour s'opposer à tout retrait longitudinal du coulisseau, et sur le coulisseau pour s'opposer à toute poussée longitudinale du coulisseau, et ainsi définir ladite première position de blocage.

L'idée à la base de l'invention est de prévoir un double système de fixation permettant, d'une part, après la première poussée longitudinale, de fixer le coulisseau plaqué contre le corps creux, supprimant ainsi tout jeu fonctionnel et empêchant tout engagement longitudinal supplémentaire ; d'autre part, après une retrait partiel du coulisseau, de maintenir le coulisseau lié au corps creux pour éviter le décrochement complet de l'objet. De plus, le choc est signalé par le retrait partiel du coulisseau par rapport au corps creux. Il est ainsi possible de savoir que le dispositif de fixation a subit un choc et d'intervenir en conséquence.

Le dispositif de fixation selon l'invention peut avantageusement présenter les particularités suivantes :
- lesdits moyens de blocage sont agencés pour :
   - par application d'une seconde poussée longitudinale sur le coulisseau succédant au premier effort de retrait longitudinal, s'escamoter partiellement et bloquer longitudinalement le coulisseau par rapport au corps creux dans la première position de blocage ;
- par application d'un second effort de retrait longitudinal sur le coulisseau succédant à la seconde poussée longitudinale, s'escamoter totalement pour débloquer le coulisseau de la première position et autoriser son retrait total par rapport au corps creux ;
- les moyens de blocage comportent une patte flexible pourvue au moins d'un doigt de came et d'une came portés l'un par le coulisseau, l'autre par le corps creux, la came comportant un ilot central définissant un chemin de guidage apte à guider le doigt de came et pourvu d'une portion d'engagement destinée à guider le doigt de came lors de l'engagement du coulisseau dans le corps creux vers sa première position de blocage, une portion de dégagement destinée à guider le doigt de came lors du retrait du coulisseau par rapport au corps creux après la seconde position de blocage, un renfoncement séparant les portions d'engagement et de dégagement et destiné à recevoir le doigt de came et à définir la seconde position de blocage ;
- la came comporte un plot d'arrêt, longitudinalement décalé par rapport à l'ilot central et prévu longitudinalement en regard du renfoncement, le coulisseau est agencé pour que, dans la première position de blocage, le doigt de came est longitudinalement en regard du plot d'arrêt et plaqué par la patte flexible contre le plot d'arrêt qui empêche son passage de la portion d'engagement à la portion de dégagement et définit ainsi une position d'attente du doigt de came ;
- l'ilot central comporte un doigt flexible agencé pour empêcher l'introduction du doigt de came dans la portion de dégagement lors de l'engagement du coulisseau dans le corps creux et autoriser la sortie du doigt de came de la portion de dégagement lors du retrait du coulisseau par rapport au corps creux ;
- la patte flexible est portée par le coulisseau et la came est portée par le corps creux ;
- le coulisseau comporte deux mâchoires flexibles définissant entre elles un évidement longitudinal destiné à recevoir l'objet et à le bloquer entre elles par resserrement pour former les moyens d'accrochage ;
- le corps creux comporte au moins une platine s'étendant latéralement et destinée à venir en appui sur la plaque support, un crochet flexible latéralement apte à s'escamoter lors du passage du corps creux dans l'ouverture d'engagement et à se déployer sous la plaque support lorsque la platine est en appui sur la plaque support pour bloquer la plaque support entre la platine et le crochet flexible et former les moyens d'ancrage ;
- la patte flexible présente une forme en T renversé, la largeur de la tige de la forme en T est inférieure à celle des mâchoires, la barre de la forme en T forme, de part et d'autre de la tige de la forme en T, un doigt de came, le corps creux comporte deux cames prévues de part et d'autre d'un plan médian du corps creux, symétriques entre elles par rapport au plan médian et destinée chacune à recevoir l'un des doigts de came ;
- le coulisseau est formé par une tôle pliée, chaque mâchoire présente une forme en U renversé dont les extrémités des branches intérieures se faisant face sont reliées entre elles par une base de sorte à définir entre elles une forme en U définissant l'évidement longitudinal, une branche extérieure d'une mâchoire opposée à l'autre mâchoire est prolongée longitudinalement par une portion plane formant la patte flexible ;
- les extrémités libres de chaque branche extérieure de la forme en U renversé de chaque mâchoire comportent chacune un volet rabattu vers la branche intérieures correspondante de la forme en U renversé, les extrémités libres de chaque branche intérieure de ladite forme en U renversé de chaque mâchoire comportent chacune une encoche logeant le volet correspondant et agencée pour, lorsque le coulisseau est soumis au premier, second effort de retrait longitudinal, recevoir l'appui du volet et empêcher le dépliage des branches extérieures par rapport aux branches intérieures ;
- le coulisseau comporte au moins une réglette de blocage s'étendant de la base définissant l'évidement longitudinal et agencée pour, lorsque le coulisseau est soumis au premier, second effort de retrait longitudinal, prendre appui contre les extrémités libres des branches extérieures et empêcher le dépliage des branches intérieures par rapport aux branches extérieures ;
- le corps creux comprend une première et une seconde partie de corps conçues pour être montée ou démontée l'une de l'autre.

L'invention s'étend également à un assemblage d'un objet sur une plaque support pourvue d'une ouverture d'engagement, caractérisé en ce qu'il comporte un dispositif de fixation tel que décrit, le corps creux étant logé dans l'ouverture d'engagement et solidarisé à la plaque support par les moyens d'ancrage, l'objet étant solidarisé au coulisseau par les moyens d'accrochage.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1 est une vue en perspective éclatée du dispositif de fixation selon l'invention ;
- la figure 2 est une vue en perspective du dispositif de fixation de la figure 1 ;
- la figure 3 est une vue en perspective et en coupe, selon un plan médian longitudinal du coulisseau, du corps creux du dispositif de fixation de la figure 1 ;
- les figures 4 à 6 sont des vues de coté et en coupe, selon un plan médian longitudinal, du dispositif de fixation selon l'invention, illustrant les étapes de fixation ;
- les figures 7 à 9 sont des vues de coté et en coupe selon un plan médian longitudinal du dispositif de fixation selon l'invention, illustrant les étapes de désolidarisation ;
- les figures 10 et 11 sont des vues en perspectives selon un autre mode de réalisation de l'invention.

### Description des modes de réalisation

Le dispositif de fixation selon l'invention est destiné à la fixation d'un objet sur un support tel que par exemple une plaque support ou tout autre type de support similaire. Ce dispositif de fixation permet ainsi, par exemple, la fixation d'un objet dans l'habitacle d'un véhicule automobile ou tout autre type de fixation.

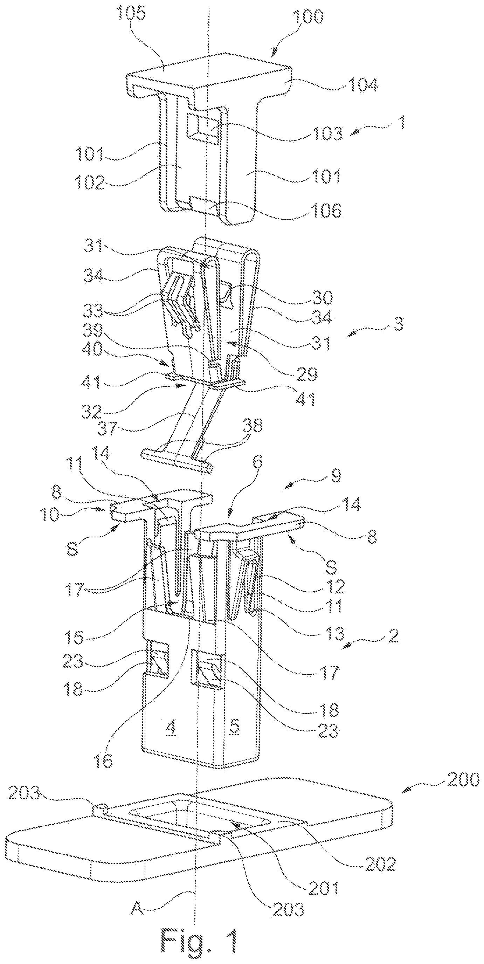

Dans l'exemple illustré, notamment à la figure 1, le dispositif de fixation 1 est utilisé pour fixer un objet 100 sur une plaque support 200. Dans cet exemple, l'objet 100 présente une double forme en T dont les tiges 101 sont reliées entre elles par une nervure centrale 102 traversée par une lumière 103 et dont les branches 104 sont reliées par une nervure transversale 105 formant avec les branches 104 une tête. L'extrémité libre de la nervure centrale 102 comporte une forme biseautée 106 destinée à faciliter la fixation de l'objet 100. Cet objet 100 est par exemple une pièce intermédiaire servant à la fixation d'un autre élément (non représenté). La plaque support 200 comporte une ouverture d'engagement 201, par exemple de forme rectangulaire, délimitée par un bossage 202 pourvu de deux ergots 203 d'indication de sens de montage.

En référence à la figure 1, le dispositif de fixation 1 selon l'invention comporte un corps creux 2 et un coulisseau 3 destinés à coopérer entre eux ainsi qu'avec la plaque support 200 et l'objet 100 pour solidariser ce dernier à la plaque support 200.

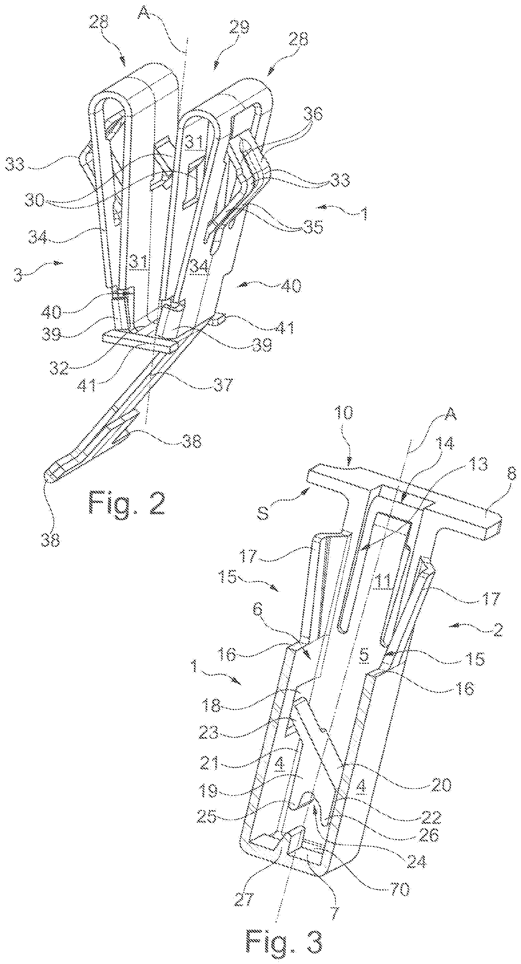

Le corps creux 2 détaillé sur la figure 3 est destiné à être introduit longitudinalement dans l'ouverture d'engagement 201 de la plaque support 200. Le corps creux 2 s'étend longitudinalement selon l'axe longitudinal A et présente une section transversale sensiblement parallélépipédique définie par deux parois latérales 4 et par deux parois transversales 5 se faisant face deux à deux, reliées entre elles et définissant entre-elles un logement 6 destiné à recevoir le coulisseau 3 décrit plus loin. La section parallélépipédique du corps creux 2 est adaptée à la forme de l'ouverture d'engagement 201 de la plaque support 200. Ainsi, le corps creux 2 peut présenter toute autre section adaptée à une autre forme d'ouverture d'engagement 201. Une extrémité du corps creux 2 est fermée par une languette de fond 7 reliant entre elles les parois latérales 4 en ménageant avec les parois transversales 5 deux ouvertures de fond 70 (dont seule l'une est visible), autorisant, de part et d'autre de la languette de fond 7, l'accès au logement 6. Ces ouvertures de fond 70 sont utilisées lors de la fabrication du dispositif de fixation 1, en particulier pour la came décrite plus loin. L'autre extrémité du corps creux 2 est ouverte et pourvue de deux platines 8 portées chacune par une des parois transversales 5 et s'étendant perpendiculairement à l'axe longitudinal A pour former une surface d'appui S destinée à être en appui sur le bossage 202 de la plaque support 200. Les platines 8 sont séparées l'une de l'autre par une fente d'engagement 9 (visible sur la figure 1) destinée à recevoir la tête de l'objet 100 lors de sa fixation sur la plaque support 200. Une extrémité latérale de chaque platine 8 comporte une forme évidée 10, complémentaire à l'ergot 203 correspondant, prévue sur la plaque support 200, l'autre extrémité comporte une forme pleine, symétrique par rapport à l'axe longitudinal A à la forme évidée 10. Ainsi, le corps creux 2 ne peut être engagé que dans un sens prédéterminé dans l'ouverture d'engagement 201 de la plaque support 200.

Chaque paroi transversale 5 comporte en outre un crochet flexible 11 proéminant vers l'extérieur du corps creux 2 et apte à se déformer élastiquement latéralement lors de l'introduction du corps creux 2 dans l'ouverture d'engagement 201. Les crochets flexibles 11 sont formés chacun par une nervure 12 en forme de U renversé (visible sur la figure 1) s'étendant transversalement de la paroi transversale 5 et dont les bords sont inclinés de sorte que leur hauteur par rapport à la paroi transversale 5 au niveau des extrémités libres de la forme en U soit inférieure à leur hauteur au niveau de la base de la forme en U. Chaque paroi transversale 5 comporte une découpe 13 en forme de U renversé conférant la flexibilité au crochet flexible 11 portant la nervure 12. Chaque platine 8 comporte un décrochement 14 prévu longitudinalement en regard du crochet flexible 11 correspondant et permettant d'accéder aux crochets flexibles 11, par l'intérieur du corps creux 2, par exemple pour le démontage du corps creux 2 de la plaque support 200 en forçant la flexion des crochets flexibles 11.

Chaque paroi latérale 4 est traversée par une ouverture latérale 15 débouchant dans la fente d'engagement 9. L'ouverture latérale 15 est délimitée longitudinalement par une arête d'appui 16 opposée à la fente d'engagement 9, et transversalement par des voiles 17 proéminant vers l'extérieur du corps creux 2 et inclinés pour se rapprocher de l'axe longitudinal A en s'éloignant des platines 8. Une des parois latérales 4 comporte deux ouvertures de came 18 alignées entre elles longitudinalement et prévues entre l'arête d'appui 16 et la languette de fond 7, et dont la fonction est décrite plus loin.

Chaque paroi transversale 5 porte une came formée par un ilot central 19 prévu sans contact entre les paroi transversales 4 pour définir un chemin de guidage périphérique. L'ilot central 19 comporte un pan incliné 20 tourné vers les platines 8 et incliné de sorte que la distance le séparant des platines 8 augmente progressivement en s'éloignant de la face latérale 4 comportant les ouvertures de came 18 vers l'autre face latérale 4 ne comportant pas d'ouverture de came. De part et d'autre du pan incliné 20, l'ilot central 19 comporte deux pans longitudinaux 21, 22 définissant une portion d'engagement du chemin de guidage et une portion de dégagement du chemin de guidage. L'ilot central 19 porte un doigt flexible 23 prévu à la pointe de l'ilot central 19 entre la portion d'engagement définie par le pan longitudinal 21 et le pan incliné 20. Ce doigt flexible 23 n'est pas en contact avec la paroi transversale 5 correspondante et s'étend dans l'alignement du pan incliné 20 jusqu'au travers de l'ouverture de came 18. Ainsi, le doigt flexible 23 s'interpose à toute introduction longitudinale dans la portion de dégagement en venant des platines 8. Le doigt flexible 23 peut se déformer lorsqu'il est soumis à des forces de contrainte. A l'opposé du pan incliné 20, l'ilot central 19 comporte un renfoncement 24 séparé de la portion d'engagement par un nez d'engagement 25 proéminent longitudinalement par rapport au renfoncement 24, et séparé de la portion de dégagement par un nez de dégagement 26 également proéminent longitudinalement par rapport au renfoncement 24. Le renfoncement 24 présente une inclinaison sensiblement similaire à celle du pan incliné 20. La came comporte un plot d'arrêt 27 porté par la languette de fond 7 et orienté longitudinalement vers le renfoncement 24. Ce plot d'arrêt 27 comporte une face d'arrêt sensiblement parallèle à l'axe longitudinal A.

Les cames sont symétriques entre elles par rapport à un plan médian passant par l'axe longitudinal A et par le centre des ouvertures latérales 15.

Le coulisseau 3 détaillé sur la figure 2 est destiné à être solidarisé à l'objet 100 et engagé longitudinalement dans le logement 6 du corps creux 2. Le coulisseau 3 comporte des mâchoires 28 déformables se faisant face et définissant entre elles un évidement longitudinal 29 destiné à recevoir l'objet 100 et le bloquer.

Les mâchoires 28 sont agencées pour, lors de l'engagement longitudinal du coulisseau 3 dans le corps creux 2, se rapprocher l'une vers l'autre et réduire la largeur de l'évidement longitudinal 29 pour enserrer l'objet 100. De plus, chaque mâchoire 28 comporte une dent 30 orientée vers la mâchoire 28 opposée et destinée à se loger dans la lumière 103 de l'objet 100 lors de la déformation de la mâchoire 28 correspondante. Les dents 30 sont avantageusement prévues latéralement en quinconce pour ne pas interférer l'une avec l'autre lors de ce rapprochement. La largeur de la lumière 103 est prévue pour recevoir les deux dents 30 cote à cote.

Le coulisseau 3 est formé par une tôle pliée. Ainsi, chaque mâchoire 28 est formée par une partie de la tôle pliée en forme de U renversé. Les extrémités des branches intérieures 31 de cette forme en U renversé se faisant face sont reliées entre elles par une base 32 de sorte que les mâchoires 28 définissent entre elles une forme en U. Ainsi, les branches intérieures 31 définissent l'évidement longitudinal 29 et portent les dents 30 formées par découpe et pliage de la tôle.

Chaque mâchoire 28 comporte une paire de pattes de blocage 33 élastiquement déformables, portées par les branches extérieures 34 de la forme en U renversé. Chaque patte de blocage 33 présente une forme en V dont la pointe est orientée latéralement à l'opposé de l'évidement longitudinal 29 de sorte à définir un premier pan 35 orienté vers la base du coulisseau 3 et un second pan 36 orienté à l'opposé de la base du coulisseau 3. Chaque paire de pattes de blocage 33 est formée par découpe et pliage de la tôle avec l'extrémité du premier pan 35 opposée à la pointe de la forme en V solidaire de la branche extérieure 34, et l'extrémité du second pan 36 opposée à la pointe de la forme en V libre en déplacement. Chaque patte de blocage 33 est élastiquement déformable de sorte que la pointe de la forme en V est plus ou moins proéminente par rapport à la face de la branche extérieure 34 correspondante.

Le coulisseau 3 comporte une patte flexible 37 formée par une portion plane prolongeant longitudinalement la branche extérieure 34 d'une des mâchoires 28. La patte flexible 37 présente une forme en T renversé, dont la base de la tige est solidaire de la mâchoire 28 correspondante et dont la barre est libre. Les extrémités libres de la barre de la forme en T forment des doigts de came 38. En l'extrémité libre de la patte flexible 37, la tôle est repliée pour augmenter la résistance mécanique des doigts de came 38. La largeur de la tige de la forme en T est inférieure à la largeur de la mâchoire 28 correspondante.

Les extrémités libres de chaque branche extérieure 34 de mâchoire 28 comportent chacune un volet 39 rabattu vers la branche intérieure 31 correspondante. Par ailleurs, les extrémités libres de chaque branche intérieure 31 de mâchoire 28 comportent chacune une encoche 40 logeant le volet 39 correspondant.

Enfin, le coulisseau 3 comporte deux réglettes de blocage 41 prévues de part et d'autre de la base 32 à laquelle elles ont solidaires. Ces réglettes de blocage 41 dépassent de la base 32 pour passer sous les volets 39 précédemment décrits.

Préalablement à la fixation de l'objet 100 sur la plaque support 200, on pré-assemble le corps creux 2 sur la plaque support 200 et l'objet 100 au coulisseau 3. Pour ce faire, le corps creux 2 est introduit longitudinalement dans l'ouverture d'engagement 201 de la plaque support 200 jusqu'à ce que les platines 8 soient en appui sur le bossage 202. Lors de cette introduction, les bords de l'ouverture d'engagement 201 déforment élastiquement les crochets flexibles 11 l'un vers l'autre. Une fois que les crochets flexibles 11 ont franchi l'épaisseur de la plaque support 200, ils se déploient vers l'extérieur, prenant appui sous la plaque support 200. Dans cette position de pré-assemblage, les platines 8 sont en appui sur la plaque support 200. Ainsi, les platines 8 et les crochets flexibles 11 coincent la plaque support 200 et forment des moyens d'ancrage solidarisant le corps creux 2 à la plaque support 200. Par ailleurs, l'objet 100 est introduit longitudinalement dans le logement 29 longitudinal du coulisseau 3 jusqu'à ce que l'objet 100 vienne en butée contre la base 32 du coulisseau 3. Dans cette position, les dents 30 coïncident longitudinalement avec la lumière 103 de l'objet 100.

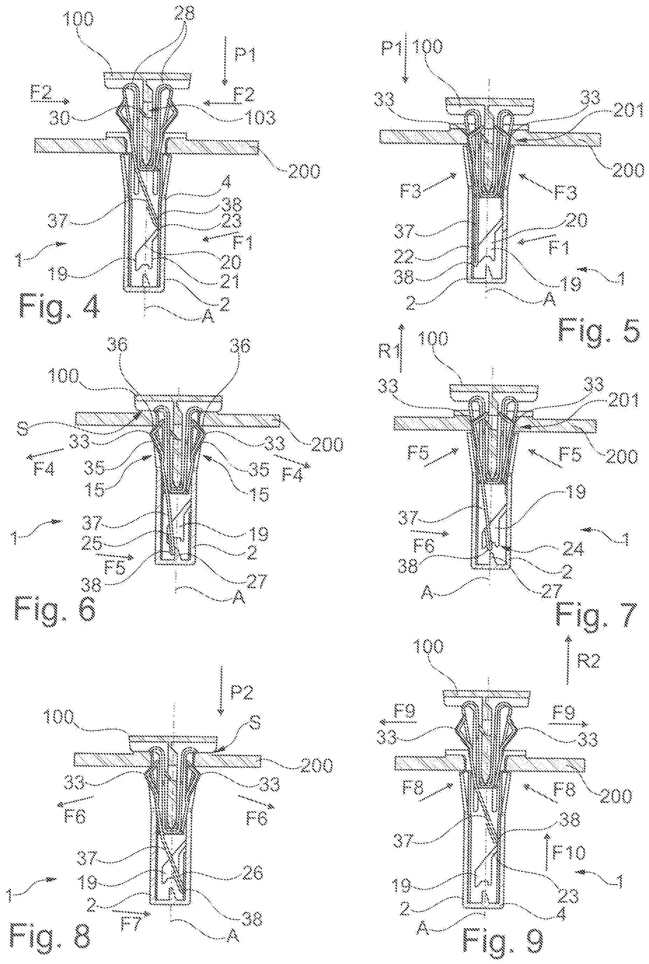

La fixation de l'objet 100 sur la plaque support 200 est décrite ci-après en référence aux figures 4 à 6. Cette fixation est obtenue par une première poussée longitudinale illustrée par la flèche P1 et appliquée sur le coulisseau 3 par rapport au corps creux 2.

Après le pré-assemblage, en référence à la figure 4, le coulisseau 3 portant l'objet 100 est présenté en regard du logement 6 du corps creux 2 porté par la plaque support 200 de sorte que les formes évidées 10 soient longitudinalement en regard des ergots 203. On est ainsi sur de l'orientation de la came et en particulier de la position du doigt flexible 23. Dans la foulée, le coulisseau 3 est engagé longitudinalement dans le corps creux 2 de sorte que la patte flexible soit orientée vers le doigt flexible 23. Au début de l'engagement longitudinal, la patte flexible 37 est élastiquement déformée selon la flèche F1 et en appui contre la paroi latérale du corps creux 2. Ensuite, les doigts de came 38 viennent en contact avec les doigts flexibles 23 qui les dévient en déformant la patte flexible 37 selon la même flèche F1, empêchant ainsi les doigts de came 38 de s'engager dans les portions de dégagement de la came délimitées par les pans longitudinaux 21.

L'engagement longitudinal est poursuivi. Au passage de l'ouverture d'engagement 201 dans la plaque support 200, les mâchoires 28 sont déformées élastiquement l'une vers l'autre selon les flèches F2, les dents 30 s'introduisant de part et d'autre de l'objet 100 dans la lumière 103. Ainsi, l'objet 100 est solidarisé au coulisseau 3 par les dents 30 formant les moyens d'accrochage de l'objet 100 au corps creux 2.

En référence à la figure 5, l'engagement longitudinal est poursuivi. Les pattes de blocages 33 sont déformées élastiquement l'une vers l'autre au passage de l'ouverture d'engagement 201 de la plaque support 200 selon les flèches F3. Les doigts de came 38 circulent le long des pans inclinés 20, la patte flexible 37 prolongeant sa déformation élastique selon la flèche F1, les doigts de came 38 s'engageant ensuite dans les portions d'engagement délimitées par les pans longitudinaux 22.

En référence à la figure 6, après le passage de la plaque support 200, les pattes de blocages 33 se déploient au travers des ouvertures latérales 15 selon les flèches F4, prenant appui sous la plaque support 200 et contre le coulisseau 3. Les premiers pans 35 des pattes de blocages 33 sont en appui contre les voiles 17 du coulisseau 3 et sollicitent le retrait longitudinal du coulisseau 3 par rapport au corps creux 2. Simultanément, les seconds pans 36 des pattes de blocages 33 sont en appui sous la plaque support 200 et sollicitent le coulisseau 3 dans son sens d'engagement. Ainsi, le coulisseau 3 est immobile, dans une première position de blocage longitudinal dans laquelle son retrait longitudinal est limité par les pattes de blocage 33 et la poursuite de son engagement longitudinal empêché par l'appui des platines 8 contre la plaque support 200 et de l'objet 100 contre la plaque support 200. Ainsi, dans cette première position de blocage, l'objet 100 est solidaire de la plaque support 200. Par ailleurs, dans cette première position de blocage du coulisseau 3, les doigts de came 38 sont libérés de la portion d'engagement, la patte flexible 37 tendant à se rabattre, les doigts de came 38 contournent les nez d'engagement 25. La patte flexible 37 vient en appui contre le plot d'arrêt 27 selon la flèche F5. Le plot d'arrêt 27 maintient les doigts de came 38 dans une position d'attente, les empêchant de rejoindre directement la portion de dégagement du chemin de came.

Dans cette première position de blocage, l'objet 100 est solidaire de la plaque support 200 contre laquelle il est plaqué, sans jeu résiduel. Toute nouvelle poussée longitudinale est empêchée.

La désolidarisation de l'objet 100 par rapport à la plaque support 200 est décrite ci-après en référence aux figures 7 à 9. Cette désolidarisation implique deux étapes successives distinctes à savoir, l'application sur le coulisseau 3 d'un premier effort de retrait longitudinal par rapport au corps creux 2 illustré par la flèche R1, puis l'application sur le coulisseau 3 d'une seconde poussée longitudinale par rapport au corps creux 2 illustrée par la flèche P2 et enfin l'application sur le coulisseau 3 d'un second effort de retrait longitudinal illustré par la flèche R2. Le premier effort de retrait longitudinal peut intervenir, soit lors d'un choc au cours duquel l'inertie de l'objet 100 soumet le coulisseau 3 à un effort de retrait longitudinal, soit volontairement par traction directe ou indirecte sur le coulisseau 3.

En référence à la figure 7, le coulisseau 3 soumis à ce premier effort de retrait longitudinal R1 se déplace longitudinalement par rapport au corps creux 2 d'une première course de retrait au cours de laquelle, d'une part les pattes de blocage 33 se déforment au passage de l'ouverture d'engagement 201 de la plaque support 200 pour s'escamoter selon les flèches F5 et, d'autre part, la patte flexible 37 se dégage longitudinalement du plot d'arrêt 27, les doigts de came 38 venant se loger dans les renfoncements 24 des ilots centraux 19 selon la flèche F6. Le retrait du coulisseau 3 est partiel, la poursuite du retrait sous l'effet d'un effort de retrait est empêchée par les doigts de came 38 bloqués dans les renfoncements 24 définissant ainsi une seconde position de blocage longitudinal.

Pour pouvoir retirer le coulisseau 3 du corps creux 2, il convient, en référence à la figure 8, d'appliquer au coulisseau 3 une seconde poussée longitudinale par rapport au corps creux 2 illustrée par la flèche P2. Lors de cette seconde poussée longitudinale P2, les pattes de blocages 33 se redéploient sous la plaque support 200 selon les flèches F6. La patte flexible 37 tendant à se rabattre, les doigts de came 38 contournent les nez de dégagement 26 pour se placer dans la portion de dégagement selon la flèche F7. Le coulisseau 3 n'est alors plus dans sa seconde position de blocage mais maintenu de nouveau dans la première position de blocage. Le coulisseau 3 peut ensuite être extrait, tel qu'illustré par la figure 9 par le biais d'un second effort de retrait longitudinal appliqué sur le coulisseau 3 et illustré par la flèche R2.

Lors de ce retrait, au passage de l'ouverture d'engagement 201 de la plaque support 200, les pattes de blocage 33 se déforment pour s'escamoter selon les flèches F8 avant de se re-déployer au-dessus de la plaque support 200 selon les flèches F9. Les doigts de came 38 circulent librement dans la portion de dégagement jusqu'au doigt flexible 23 dont ils forcent la flexion selon la flèche F10 avant de poursuivre leur déplacement le long de la paroi latérale 4 du corps creux 2. Le coulisseau 3 peut ainsi être entièrement retiré du corps creux 2. Une fois le coulisseau 3 extrait, l'objet 100 peut être désolidarisé du coulisseau 3 par écartement des mâchoires 28, les dents 30 libérant alors la lumière 103. Le corps creux 2 peut être désolidarisé de la plaque support 200 en introduisant un outil dans le décrochement 14 et en rabattant de force les crochets flexibles 11 vers l'axe longitudinal A.

Après fixation, lorsque le coulisseau 3 est soumis à un effort de traction, chaque volet 39 de branche extérieure 34 de mâchoire 28 vient en appui contre une arête de l'encoche 40 correspondante et empêche le dépliage des branches extérieures 34 par rapport aux branches intérieures 31. De même, chaque réglette de blocage 41 vient en appui sous le volet 39 correspondant et empêche le dépliage des branches intérieures 31 par rapport aux branches extérieures 34. Ainsi, la résistance mécanique du coulisseau 3 est optimale.

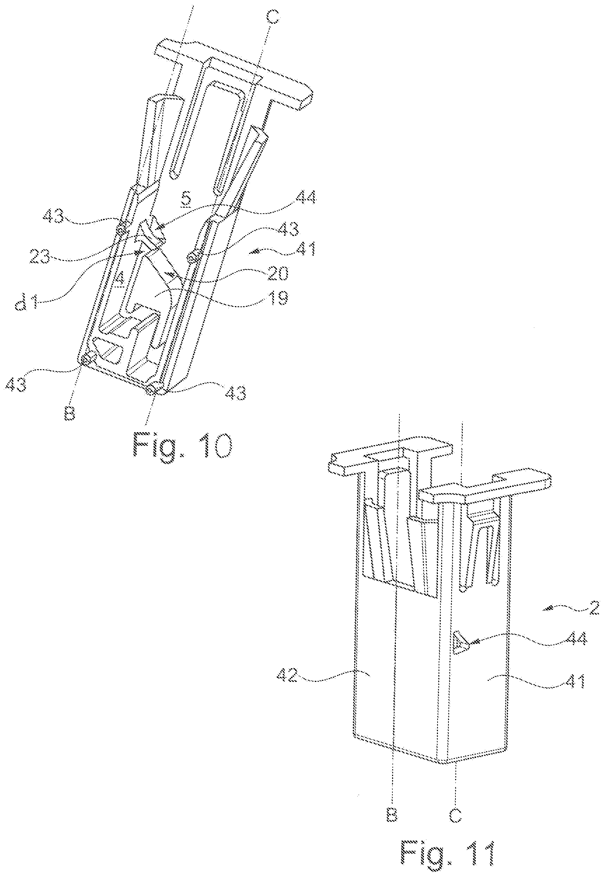

Selon un autre mode de réalisation de l'invention, représenté sur les figures 10 et 11, le corps creux 2 est formé par un assemblage des première et seconde parties de corps 41 et 42. Ainsi, avant d'être assemblée, chaque partie du corps creux 2 peut être stockée séparément de manière à limiter le volume de stockage, notamment lors du transport. Les deux parties 41 et 42 comprennent un système de blocage/déblocage pour permettre l'assemblage ou le dé-assemblage du corps creux 2. Ce système comprend des pions de centrage 43 placés sur au moins l'une des deux parties de corps 41, 42 ainsi que des orifices, non représentés, conçus pour recevoir les pions de centrage, placés symétriquement par rapport aux pions de centrage 43 sur la partie de corps opposée.

La partie de corps 41 comprend une des deux parois transversales 5 et une portion de chacune des deux parois latérales 4. La partie de corps 42 comprend quand à elle l'autre paroi transversale 5 et une portion de chacune des parois latérales 4 complétant les portions de la partie de corps 41. Les portions de parois latérales opposées des deux parties de corps étant symétriques selon les axes B et C.

La paroi transversale 5 du corps creux 2 comprend dans ce mode de réalisation une ouverture de contrôle 44 à partir de laquelle il est possible d'observer une déformation du doigt flexible 23. Le doigt flexible 23 est séparé de l'îlot central 19 et est fixé contre la paroi latérale 4 sans passer dans l'ouverture de came 18 non présente dans ce mode de réalisation. Le doigt est agencé de manière à suivre le prolongement du pan incliné 20.

Un espace d1 entre le doigt flexible 23 et l'îlot central 19 permet le déplacement du doigt de came 38 dans la portion de désengagement, le long de la paroi latérale 4. Le doigt flexible est ainsi déformé par la contrainte exercée par le doigt de came 38.

L'invention permet d'atteindre les objectifs précédemment mentionnés. En effet, il ressort de la description que la fixation de l'objet 100 sur la plaque support 200 est obtenue par une première poussée longitudinale P1 et que la désolidarisation ne peut intervenir qu'après un premier effort de retrait longitudinal R1 suivi d'une seconde poussée longitudinale P2 puis d'un second effort de retrait longitudinal R2. Ainsi, tout démontage intempestif est rendu impossible. De plus, lorsque la fixation subit un choc, le dispositif de fixation 1 passe de sa première position de blocage à la seconde position de blocage dans laquelle le coulisseau 3 est longitudinalement déplacé par rapport au corps creux 2. La position du coulisseau 3, en partie extrait du corps creux 2, témoigne ainsi du fait que le dispositif de fixation 1 a subi un choc. Ainsi, le dispositif de fixation 1 peut être changé, réparé ou simplement vérifié. Le fait qu'après un choc l'objet 100 reste attaché à la plaque support 200 permet d'éviter qu'il ne se transforme en projectile dangereux. Le dispositif de fixation 1 selon l'invention présente ainsi un double système de fixation fiabilisant son utilisation.

Il va de soi que la présente invention ne saurait être limitée à la description qui précède d'un de ses modes de réalisation, susceptibles de subir quelques modifications sans pour autant sortir du cadre de l'invention, comme définie dans les revendications annexées.

## Revendications

1. Dispositif de fixation (1) d'un objet (100) sur une plaque support (200), comportant un corps creux (2) destiné à être logé dans une ouverture d'engagement (201) de ladite plaque support (200) et pourvu de moyens d'ancrage (8, 11) aptes à le solidariser à ladite plaque support (200), un coulisseau (3) apte à être successivement engagé et extrait par rapport audit corps creux (2) et pourvu de moyens d'accrochage (30) aptes à le solidariser audit objet (100), des moyens de blocage (15, 33 ; 19,24,27,37,38) agencés pour :
- par application d'une première poussée longitudinale (P1) sur ledit coulisseau (3), dans un premier temps, autoriser l'engagement longitudinal dudit coulisseau (3) dans ledit corps creux (2) et, dans un second temps, tendre à maintenir ledit coulisseau (3) bloqué longitudinalement par rapport audit corps creux (2) dans une première position de blocage dans laquelle il ne peut être engagé longitudinalement au-delà de ladite première position de blocage,
- par application d'un premier effort de retrait longitudinal (R1) sur ledit coulisseau (3) succédant à ladite première poussée longitudinale (P1), s'escamoter partiellement et, dans un premier temps, débloquer ledit coulisseau (3) de ladite première position de blocage et autoriser son retrait partiel par rapport audit corps creux (2) depuis ladite première position de blocage puis, dans un second temps, bloquer longitudinalement ledit coulisseau (3) dans une seconde position de blocage décalée longitudinalement par rapport à ladite première position et dans laquelle il ne peut être retiré dudit corps creux (2) et peut être engagé longitudinalement au-delà de ladite seconde position de blocage,
**caractérisé en ce que** lesdits moyens de blocage (15, 33) comportent au moins une ouverture latérale (15) traversant ledit corps creux (2) et une patte de blocage (33) élastiquement déformable portée par ledit coulisseau (3) et destinée à, lors de l'engagement dudit coulisseau (3) dans ledit corps creux (2), se déployer latéralement dans ladite ouverture latérale (15) et destiné à prendre appui simultanément sous ladite plaque support (200) pour s'opposer à tout retrait longitudinal dudit coulisseau (3), et sur ledit coulisseau (3) pour s'opposer à toute poussée longitudinale dudit coulisseau (3), et ainsi définir ladite première position de blocage.

2. Dispositif de fixation (1) selon la revendication 1, **caractérisé en ce que** lesdits moyens de blocage sont agencés pour :
- par application d'une seconde poussée longitudinale (P2) sur ledit coulisseau (3) succédant audit premier effort de retrait longitudinal (R1), s'escamoter partiellement et, bloquer longitudinalement ledit coulisseau (3) par rapport audit corps creux (2) dans ladite première position de blocage,
- par application d'un second effort de retrait longitudinal (R2) sur ledit coulisseau (3) succédant à ladite seconde poussée longitudinale (P2), s'escamoter totalement pour débloquer ledit coulisseau (3) de ladite première position et autoriser son retrait total par rapport audit corps creux (2).

3. Dispositif de fixation (1) selon la revendication 1, **caractérisé en ce que** lesdits moyens de blocage (19, 24, 27, 37, 38) comportent une patte flexible (37) pourvue au moins d'un doigt de came (38) et d'une came (19, 24, 27) portés l'un par ledit coulisseau (3), l'autre par ledit corps creux (2), ladite came (19, 24, 27) comportant un ilot central (19) définissant un chemin de guidage apte à guider ledit doigt de came (38) pourvu d'une portion d'engagement destinée à guider ledit doigt de came (38) lors de l'engagement dudit coulisseau (3) dans ledit corps creux (2) vers sa première position de blocage, une portion de dégagement destinée à guider ledit doigt de came (38) lors du retrait dudit coulisseau (3) par rapport audit corps creux (2) après ladite seconde position de blocage, un renfoncement (24) séparant lesdites portions d'engagement et de dégagement et destiné à recevoir ledit doigt de came (38) et à définir ladite seconde position de blocage.

4. Dispositif de fixation (1) selon la revendication 3, **caractérisé en ce que** ladite came (19, 24, 27) comporte un plot d'arrêt (27), longitudinalement décalé par rapport audit ilot central (19) et prévu longitudinalement en regard dudit renfoncement (24), **en ce que** ledit coulisseau (3) est agencé pour que, dans ladite première position de blocage, ledit doigt de came (38) longitudinalement est en regard dudit plot d'arrêt (27) et plaqué par ladite patte flexible (37) contre ledit plot d'arrêt (27) qui empêche son passage de ladite portion d'engagement à ladite portion de dégagement et définit ainsi une position d'attente dudit doigt de came (38).

5. Dispositif de fixation (1) selon la revendication 4, **caractérisé en ce que** ledit ilot central (19) comporte un doigt flexible (23) agencé pour empêcher l'introduction dudit doigt de came (38) dans ladite portion de dégagement lors de l'engagement dudit coulisseau (3) dans ledit corps creux (2) et autoriser la sortie dudit doigt de came (38) de ladite portion de dégagement lors du retrait dudit coulisseau (3) par rapport audit corps creux (2).

6. Dispositif de fixation (1) selon l'une quelconque des revendications 3 à 5, **caractérisé en ce que** ladite patte flexible (37) est portée par ledit coulisseau (3) et **en ce que** ladite came (19, 24, 27) est portée par ledit corps creux (2).

7. Dispositif de fixation (1) selon la revendication 1, **caractérisé en ce que** ledit coulisseau (3) comporte deux mâchoires (28) flexibles définissant entre elles un évidement longitudinal (29) destiné à recevoir ledit objet (100) et à le bloquer entre elles par resserrement pour former lesdits moyens d'accrochage (30).

8. Dispositif de fixation (1) selon la revendication 1, **caractérisé en ce que** ledit corps creux (2) comporte au moins une platine (8) s'étendant latéralement et destinée à venir en appui sur ladite plaque support (200), un crochet flexible (11) latéralement apte à s'escamoter lors du passage dudit corps creux (2) dans ladite ouverture d'engagement (201) et à se déployer sous ladite plaque support (200) lorsque ladite platine (8) est en appui sur ladite plaque support (200) pour bloquer ladite plaque support (200) entre ladite platine (8) et ledit crochet flexible (11) et former lesdits moyens d'ancrage (8, 11).

9. Dispositif de fixation (1) selon la revendication 3, **caractérisé en ce que** ladite patte flexible (37) présente une forme en T renversé, **en ce que** la largeur de ladite tige de la forme en T est inférieure à celle desdites mâchoires, **en ce que** la barre de ladite forme en T formant, de part et d'autre de ladite tige de la forme en T, un doigt de came (38), **en ce que** ledit corps creux (2) comporte deux cames (19, 24, 27) prévues de part et d'autre d'un plan médian dudit corps creux (2), symétriques entre elles par rapport audit plan médian et destinée chacune à recevoir l'un desdits doigts de came (38).

10. Dispositif de fixation (1) selon la revendication 7, **caractérisé en ce que** ledit coulisseau (3) est formé par une tôle pliée, **en ce que** chaque mâchoire (28) présente une forme en U renversé dont les extrémités des branches intérieures (31) se faisant face sont reliées entre elles par une base (32) de sorte à définir entre elles une forme en U définissant ledit évidement longitudinal (29), **en ce qu'**une branche extérieure (34) d'une mâchoire (28) opposée à l'autre mâchoire (28) est prolongée longitudinalement par une portion plane formant ladite patte flexible (37).

11. Dispositif de fixation (1) selon la revendication 10, **caractérisé en ce que** les extrémités libres de chaque branche extérieure (34) de ladite forme en U renversé de chaque mâchoire (28) comportent chacune un volet (39) rabattu vers la branche intérieures (31) correspondante de ladite forme en U renversé, **en ce que** les extrémités libres de chaque branche intérieure (31) de ladite forme en U renversé de chaque mâchoire (28) comportent chacune une encoche (40) logeant ledit volet (39) correspondant et agencée pour, lorsque ledit coulisseau (3) est soumis audit premier, second effort de retrait longitudinal (R1, R2), recevoir l'appui dudit volet (39) et empêcher le dépliage desdites branches extérieures (34) par rapport auxdites branches intérieures (31).

12. Dispositif de fixation (1) selon la revendication 10, **caractérisé en ce que** ledit coulisseau (3) comporte au moins une réglette de blocage (41) s'étendant de ladite base (32) définissant ledit évidement longitudinal (29) et agencée pour, lorsque ledit coulisseau (3) est soumis audit premier, second effort de retrait longitudinal (R1, R2), prendre appui contre les extrémités libres desdites branches extérieures (34) et empêcher le dépliage desdites branches intérieures (31) par rapport auxdites branches extérieures (34).

13. Dispositif de fixation (1) selon la revendication 1, **caractérisé en ce que** le corps creux (2) comprend une première et une seconde partie de corps (41 ; 42) conçues pour être montée ou démontée l'une de l'autre.

14. Assemblage d'un objet (100) sur une plaque support (200) pourvue d'une ouverture d'engagement (201), **caractérisé en ce qu'**il comporte un dispositif de fixation (1) selon l'une quelconque des revendications précédentes, ledit corps creux (2) étant logé dans ladite ouverture d'engagement (201) et solidarisé à ladite plaque support (200) par lesdits moyens d'ancrage (8, 11), ledit objet (100) étant solidarisé audit coulisseau (3) par lesdits moyens d'accrochage (30).

## Patentansprüche

1. Vorrichtung zur Befestigung (1) eines Objektes (100) auf einer Trägerplatte (200), umfassend einen hohlen Korpus (2), der dazu bestimmt ist, in einer Einsetzöffnung (201) der Trägerplatte (200) angeordnet zu werden und der mit Verankerungsmitteln (8, 11) ausgestattet ist, die in der Lage sind, diesen an der Trägerplatte (200) zu befestigen, einen Schieber (3), der in der Lage ist, nacheinander in Bezug auf den hohlen Korpus (2) eingesetzt und herausgenommen zu werden und der mit Koppelmitteln (30) ausgestattet ist, die in der Lage sind, diesen an dem Objekt (100) zu befestigen, Blockiermittel (15, 33; 19, 24, 27, 37, 38), die ausgebildet sind, um:
- durch Anwenden eines ersten longitudinalen Stoßes (P1) auf den Schieber (3), in einem ersten Schritt, das longitudinale Einsetzen des Schiebers (3) in den hohlen Korpus (2) zu erlauben, und, in einem zweiten Schritt, den longitudinal blockierten Schieber (3) in Bezug auf den hohlen Korpus (2) in einer ersten Blockierposition möglichst zu halten, in welcher er nicht longitudinal über die erste Blockierposition hinaus eingesetzt werden kann,
- durch Anwenden einer ersten longitudinalen Rückzugskraft (R1) auf den Schieber (3), die dem ersten longitudinalen Stoß (P1) nachfolgt, sich partiell zu eskamotieren und, in einem ersten Schritt, den Schieber (3) von der ersten Blockierposition freizugeben und seinen partiellen Rückzug in Bezug auf den hohlen Korpus (2) von der ersten Blockierposition zu erlauben, und anschließend, in einem zweiten Schritt, den Schieber (3) in einer zweiten Blockierposition, die in longitudinaler Richtung in Bezug auf die erste Position versetzt ist und in welcher er nicht aus dem hohlen Korpus (2) herausgezogen werden kann und longitudinal jenseits der zweiten Blockierposition eingesetzt werden kann, longitudinal zu blockieren,
**dadurch gekennzeichnet,**
**dass** die Blockiermittel (15, 33) wenigstens eine den hohlen Korpus (2) durchsetztende seitliche Öffnung (15) und eine elastisch deformierbare Blockierlasche (33) aufweisen, welche Blockierlasche an dem Schieber (3) vorgesehen ist und dazu bestimmt ist, sich bei Einsetzen des Schiebers (3) in den hohlen Korpus (2) seitlich in der seitlichen Öffnung (15) auszuweiten und die dazu bestimmt ist, sich zugleich unter der Trägerplatte (200), um sich jedem longitudinalen Zurückziehen des Schiebers (3) entgegen zu setzen, und auf dem Schieber (3), um sich jedem longitudinalen Stoß des Schiebers (3) entgegen zu setzen, abzustützen, und damit die erste Blockierposition zu definieren.

2. Vorrichtung zur Befestigung (1) nach Anspruch 1, **dadurch gekennzeichnet, dass** die Blockiermittel ausgebildet sind, um:
- durch Anwenden eines zweiten longitudinalen Stoßes (P2) auf den Schieber (3), der der ersten longitudinalen Rückzugskraft (R1) nachfolgt, sich partiell zu eskamotieren, und den Schieber (3) in Bezug auf den hohlen Korpus (2) in der ersten Blockierposition longitudinal zu blockieren,
- durch Anwenden einer zweiten longitudinalen Rückzugskraft (R2) auf den Schieber (3), die dem zweiten longitudinalen Schub (P2) nachfolgt, sich vollständig zu eskamotieren, um den Schieber (3) von der ersten Position freizugeben und seinen vollständigen Rückzug in Bezug auf den hohlen Korpus (2) zu erlauben.

3. Vorrichtung zum Fixieren (1) nach Anspruch 1, **dadurch gekennzeichnet, dass** die Blockiermittel (19, 24, 27, 37, 38) eine flexible Lasche (37) umfassen, die mit wenigstens einem Nockenglied (38) und einer Nockenführung (19, 24, 27) ausgestattet sind, wobei das eine an dem Schieber (3) und das andere an dem hohlen Korpus (2) vorgesehen ist, wobei die Nockenführung (19, 24, 27) einen zentralen Block (19) umfasst, der einen Führungsweg definiert, der in der Lage ist, das Nockenglied (38) zu führen, mit einem Einsatzabschnitt, der dazu bestimmt ist, das Nockenglied (38) bei Einsetzen des Schiebers (3) in den hohlen Korpus (2) zu seiner ersten Blockierposition zu führen, mit einem Freigabeabschnitt, der dazu bestimmt ist, das Nockenglied (38) beim Zurückziehen des Schiebers (3) in Bezug auf den hohlen Korpus (2) nach der zweiten Blockierposition zu führen, wobei eine Vertiefung (24) den Einsatzabschnitt und den Freigabeabschnitt trennt und dazu bestimmt ist, das Nockenglied (38) aufzunehmen und die zweite Blockierposition zu definieren.

4. Vorrichtung zum Fixieren (1) nach Anspruch 3, **dadurch gekennzeichnet, dass** die Nockenführung (19, 24, 27) einen Haltekontakt (27) umfasst, der longitudinal in Bezug auf den zentralen Block (19) versetzt und longitudinal der Vertiefung (24) zugekehrt vorgesehen ist, dass der Schieber (3) ausgebildet ist, dass in der ersten Blockierposition das Nockenglied (38) longitudinal dem Haltekontakt (27) zugekehrt ist und durch die flexiblen Lasche (37) gegen den Haltekontakt (27) gehalten ist, der seinen Durchgang von dem Einsatzabschnitt zu dem Freigabeabschnitt verhindert und entsprechend eine Warteposition des Nockenglieds (38) definiert.

5. Vorrichtung zum Fixieren (1) nach Anspruch 4, **dadurch gekennzeichnet, dass** der zentrale Block (19) einen flexiblen Zapfen (23) umfasst, der ausgebildet ist zum Verhindern des Einsetzens des Nockenglieds (38) in den Freigabeabschnitt beim Einsetzen des Schiebers (3) in den hohlen Korpus (2) und zum Erlauben des Heraustretens des Nockenglieds (38) von dem Freigabeabschnitt beim Rückzug des Schiebers (3) in Bezug auf den hohlen Korpus (2).

6. Vorrichtung zum Fixieren (1) nach einem der Ansprüche 3 bis 5, **dadurch gekennzeichnet, dass** die flexible Lasche (37) an dem Schieber (3) vorgesehen ist, und dass die Nockenführung (19, 24, 27) an dem hohlen Korpus (2) vorgesehen ist.

7. Vorrichtung zum Fixieren (1) nach Anspruch 1, **dadurch gekennzeichnet, dass** der Schieber (3) zwei flexible Backen (28) aufweist, die zwischen sich eine longitudinale Ausnehmung (29) definieren, die dazu bestimmt ist, das Objekt (100) aufzunehmen und es zwischen sich durch Festziehen zu blockieren zum Bilden der Koppelmittel (30).

8. Vorrichtung zum Fixieren (1) nach Anspruch 1, **dadurch gekennzeichnet, dass** der hohle Korpus (2) wenigstens ein sich seitlich erstreckendes Plättchen (8) umfasst, das dazu bestimmt ist, sich gegen die Trägerplatte (200) abzustützen, wobei ein flexibler Haken (11) seitlich in der Lage ist, sich beim Durchgang des hohlen Korpus (2) in die Einsetzöffnung (201) zu eskamotieren und sich unter der Trägerplatte (200) zu entfalten, wenn das Plättchen (8) sich auf der Trägerplatte (200) abstützt, um die Trägerplatte (200) zwischen dem Plättchen (8) und dem flexiblen Haken (11) zu blockieren und die Verankerungsmittel (8, 11) zu bilden.

9. Vorrichtung zum Fixieren (1) nach Anspruch 7, **dadurch gekennzeichnet, dass** die flexible Lasche (37) eine umgekehrte T-Form aufweist, dass die Breite des Aufstrichs der T-Form kleiner ist als diejenige der Backen, dass der Querstrich der T-Form einerseits und andererseits des Aufstrichs der T-Form ein Nockenglied (38) bildet, dass der hohle Korpus (2) zwei Nockenführungen (19, 24, 27) umfasst, die einerseits und andererseits einer mittleren Ebene des hohlen Korpus (2) vorgesehen sind, die untereinander in Bezug auf die mittlere Ebene symmetrisch sind und die dazu bestimmt sind, jeweils eines der Nockenglieder (38) aufzunehmen.

10. Vorrichtung zum Fixieren (1) nach Anspruch 7, **dadurch gekennzeichnet, dass** der Schieber (3) aus einem gefalteten Blech gebildet ist, dass jede Backe (28) eine umgekehrte U-Form aufweist, deren Enden der einander zugekehrten inneren Schenkel (31) untereinander durch eine Basis (32) derart verbunden sind, dass diese miteinander eine U-Form definieren, die die longitudinale Ausnehmung (29) definiert, dass ein äußerer Schenkel (34) einer der anderen Backe (28) gegenüberliegenden Backe (28) longitudinal durch einen planen Abschnitt verlängert ist, der die flexible Lasche (37) bildet.

11. Vorrichtung zum Befestigen (1) nach Anspruch 10, **dadurch gekennzeichnet, dass** die freien Enden jedes äußeren Schenkels (34) der umgekehrten U-Form jeder Backe (28) jeweils eine zu dem korrespondierenden inneren Schenkel (31) der umgekehrten U-Form abgefaltete Abstellung (39) aufweisen, dass die freien Enden jedes inneren Schenkels (31) der umgekehrten U-Form jeder Backe (28) jeweils eine die entsprechende Abstellung (39) aufnehmende Ausnehmung (40) aufweisen, die ausgebildet sind, um, wenn der Schieber (3) der ersten, zweiten longitudinalen Rückzugskraft (R1, R2) unterworfen ist, die Abstützung der Abstellung (39) aufzunehmen und das Entfalten der äußeren Schenkel (34) in Bezug auf die inneren Schenkel (31) zu verhindern.

12. Vorrichtung zum Fixieren (1) nach Anspruch 10, **dadurch gekennzeichnet, dass** der Schieber (3) wenigstens eine Blockierleiste (41) umfasst, die sich von der die longitudinale Ausnehmung (29) definierenden Basis (32) erstreckt und die ausgebildet ist, um sich gegen die freien Enden der äußeren Schenkel (34) abzustützen und das Entfalten der inneren Schenkel (31) in Bezug auf die äußeren Schenkel (34) zu verhindern, wenn der Schieber (3) der ersten, zweiten longitudinalen Rückzugskraft (R1, R2) unterworfen ist.

13. Vorrichtung zum Fixieren (1) nach Anspruch 1, **dadurch gekennzeichnet, dass** der hohle Korpus (2) einen ersten und einen zweiten Korpusteil (45; 42) umfasst, die dazu geschaffen sind, der eine von dem anderen montiert oder abmontiert zu werden.

14. Verbund eines Objektes (100) auf einer Trägerplatte (200), welche mit einer Einsetzöffnung (201) versehen ist, **dadurch gekennzeichnet, dass** er eine Vorrichtung zum Fixieren (1) nach einem der vorhergehenden Ansprüche umfasst, wobei der hohle Korpus (2) in der Einsetzöffnung (201) untergebracht ist und an der Trägerplatte (200) durch die Verankerungsmittel (8, 11) befestigt ist, wobei das Objekt (100) an dem Schieber (3) durch die Koppelmittel (30) befestigt ist.

## Claims

1. A fastener device (1) for fastening an article (100) on a support plate (200), which fastener device comprises: a hollow body (2) that is for housing in an engagement opening (201) of said support plate (200), and that is provided with anchor means (8, 11) that are suitable for securing it to said support plate (200); a slider (3) that is suitable for successively being engaged in and extracted from said hollow body (2), and that is provided with attachment means (30) that are suitable for securing it to said article (100); and blocking means (15, 33; 19, 24, 27, 37, 38) that are arranged:
· on application of a first longitudinal thrust (P1) on said slider (3), initially to allow said slider (3) to be engaged longitudinally in said hollow body (2), and subsequently tending to hold said slider (3) blocked longitudinally relative to said hollow body (2) in a first blocking position in which it cannot be engaged longitudinally beyond said first blocking position; and
· on application of a first longitudinal removal force (R1) on said slider (3) following said first longitudinal thrust (P1), to retract in part and initially unblock said slider (3) from said first blocking position and allow it to be removed in part from said hollow body (2) starting from said first blocking position, and subsequently block said slider (3) longitudinally in a second blocking position that is longitudinally offset from said first position and in which it cannot be removed from said hollow body (2) and cannot be engaged longitudinally beyond said second blocking position;
the fastener device being **characterized in that** said blocking means (15, 33) comprise both at least one side opening (15) that passes through said hollow body (2) and also an elastically-deformable blocking tab (33) that is carried by said slider (3) and that, during engagement of said slider (3) in said hollow body (2), is for deploying sideways into said side opening (15) and for bearing simultaneously beneath said support plate (200) so as to oppose any longitudinal removal of said slider (3), and against said slider (3) so as to oppose any longitudinal thrust of said slider (3), and thus define said first blocking position.

2. A fastener device (1) according to claim 1, **characterized in that** said blocking means are arranged:
· on application of a second longitudinal thrust (P2) on said slider (3) following said first longitudinal removal force (R1), to retract in part and block said slider (3) longitudinally relative to said hollow body (2) in said first blocking position; and
· on application of a second longitudinal removal force thrust (R2) on said slider (3) following said second longitudinal thrust (P2), to retract completely so as to unblock said slider (3) from said first position and allow it to be removed completely from said hollow body (2).

3. A fastener device (1) according to claim 1, **characterized in that** said blocking means (19, 24, 27, 37, 38) comprise a flexible tab (37) provided at least with a cam finger (38) and a cam (19, 24, 27), one of which is carried by said slider (3) and the other by said hollow body (2), said cam (19, 24, 27) including a central island (19) that defines a guide path suitable for guiding said cam finger (38), and that is provided with an engagement portion for guiding said cam finger (38) towards its first blocking position while said slider (3) is being engaged in said hollow body (2), a disengagement portion for acting, while the slider (3) is being removed, to guide said cam finger (38) relative to said hollow body (2) after said second blocking position, and a setback (24) that separates said engagement and disengagement portions, and that is for receiving said cam finger (38) and for defining said second blocking position.

4. A fastener device (1) according to claim 3, **characterized in that** said cam (19, 24, 27) includes a stop lug (27) that is longitudinally offset from said central island (19) and that is provided longitudinally facing said setback (24), and **in that** said slider (3) is arranged so that, in said first blocking position, said cam finger (38) is longitudinally facing said stop lug (27) and is flattened by said flexible tab (37) against said stop lug (27) that prevents it from passing from said engagement portion to said disengagement portion, thereby defining a standby position for said cam finger (38).

5. A fastener device (1) according to claim 4, **characterized in that** said central island (19) includes a flexible finger (23) that is arranged to prevent said cam finger (38) from being inserted into said disengagement portion while said slider (3) is being engaged in said hollow body (2), and to allow said cam finger (38) to leave said disengagement portion while said slider (3) is being removed from said hollow body (2).

6. A fastener device (1) according to any one of claims 3 to 5, **characterized in that** said flexible tab (37) is carried by said slider (3), and **in that** said cam (19, 24, 27) is carried by said hollow body (2).

7. A fastener device (1) according to claim 1, **characterized in that** said slider (3) includes two flexible jaws (28) that co-operate with each other to define a longitudinal recess (29) for receiving said article (100) and for blocking it between them by clamping, so as to form said attachment means (30).

8. A fastener device (1) according to claim 1, **characterized in that** said hollow body (2) includes at least one platform (8) that extends sideways and that is for coming to bear against said support plate (200), and a flexible hook (11) that is flexible sideways and that is suitable for retracting while said hollow body (2) is passing into said engagement opening (201), and for deploying beneath said support plate (200) when said platform (8) bears against said support plate (200) so as to block said support plate (200) between said platform (8) and said flexible hook (11) and so as to form said anchor means (8, 11).

9. A fastener device (1) according to claim 7, **characterized in that** said flexible tab (37) presents an upsidedown T-shape, **in that** the width of said stem of the T-shape is less than the width of said jaws, **in that** the bar of said T-shape forms a cam finger (38) on either side of said stem of the T-shape, and **in that** said hollow body (2) includes two cams (19, 24, 27) that are provided on either side of a mid-plane of said hollow body (2), symmetrically to each other about said mid-plane and each for receiving one of said cam fingers (38).

10. A fastener device (1) according to claim 7, **characterized in that** said slider (3) is formed by folded sheet metal, **in that** each jaw (28) presents an upsidedown U-shape, the ends of the facing inside branches (31) of said jaws being interconnected via a base (32) so as to co-operate with each other to define a U-shape that defines said longitudinal recess (29), and **in that** an outside branch (34) of one of the jaws (28) opposite to the other jaw (28) is extended longitudinally by a plane portion forming said flexible tab (37).

11. A fastener device (1) according to claim 10, **characterized in that** each free end of each outside branch (34) of said upsidedown U-shape of each jaw (28) includes a flap (39) that is folded back towards the corresponding inside branch (31) of said upsidedown U-shape, **in that** each free end of each inside branch (31) of said upsidedown U-shape of each jaw (28) includes a notch (40) that houses said corresponding flap (39) and that is arranged in such a manner that, while said slider (3) is being subjected to said first or second longitudinal removal force (R1, R2), it receives thrust from said flap (39), so as to prevent said outside branches (34) from unfolding relative to said inside branches (31).

12. A fastener device (1) according to claim 10, **characterized in that** said slider (3) includes at least one blocking strip (41) that extends from said base (32) defining said longitudinal recess (29), and that is arranged in such a manner that, while said slider (3) is being subjected to said first or second longitudinal removal force (R1, R2), it bears against the free ends of said outside branches (34), so as to prevent said inside branches (31) from unfolding relative to said outside branches (34).

13. A fastener device (1) according to claim 1, **characterized in that** the hollow body (2) comprises first and second body portions (45; 42) that are designed to be mounted on each other and to be taken apart.

14. An assembly of an article (100) on a support plate (200) that is provided with an engagement opening (201), the assembly being **characterized in that** it comprises a fastener device (1) according to any preceding claim, said hollow body (2) being housed in said engagement opening (201) and secured to said support plate (200) by said anchor means (8, 11), said article (100) being secured to said slider (3) by said attachment means (30).
